Europäisches Patentamt

European Patent Office

Office européen des brevets

(19)

(11) EP 0 692 305 B1

(12) **FASCICULE DE BREVET EUROPEEN**

(45) Date de publication et mention
de la délivrance du brevet:
**20.10.1999 Bulletin 1999/42**

(51) Int. Cl.$^6$: **B01J 21/04**, B01J 35/10,
C01B 17/04, B01D 53/48

(21) Numéro de dépôt: **95401677.0**

(22) Date de dépôt: **12.07.1995**

(54) **Catalyseur à base d'alumine pour le traitement de gaz contenant des composés soufres, utilisation de ces catalyseurs pour le traitement et procédés de traitement desdits gaz**

Aluminium Katalysator zur Behandlung von schwefelenthaltenden Gasen, Verwendung dieser Katalysatoren zur Gasbehandlung sowie ein Verfahren zur Gasbehandlung

Alumina catalyst for the treatment of sulfur containing gases, use of these catalysts for the treatment and treatment process for these gases

(84) Etats contractants désignés:
**AT BE CH DE DK ES FR GB GR IE IT LI LU MC NL PT SE**

(30) Priorité: **13.07.1994 FR 9408745**

(43) Date de publication de la demande:
**17.01.1996 Bulletin 1996/03**

(73) Titulaire:
**INSTITUT FRANCAIS DU PETROLE**
**92852 Rueil-Malmaison Cedex (FR)**

(72) Inventeurs:
 • **Nedez, Christophe**
  **F-92600 Asnieres sur Seine (FR)**
 • **Legendre, Olivier**
  **F-95220 Herblay (FR)**

(56) Documents cités:
 **EP-A- 0 115 449**       **EP-A- 0 584 369**
 **FR-A- 1 178 168**       **GB-A- 1 400 365**
 **GB-A- 2 080 273**

## Description

La présente invention concerne un catalyseur pour le traitement de gaz, notamment des effluents gazeux industriels, en vue de la production de soufre élémentaire.

Les principales réactions catalysées mises en oeuvre ordinairement dans ce but sont la réaction de Claus et la réaction d'hydrolyse des composés organiques du soufre, impliquées dans le procédé industriel de production de soufre dit procédé Claus.

Ce procédé permet de préparer du soufre à partir du sulfure d'hydrogène en deux étapes.

Dans la première étape, le sulfure d'hydrogène est brûlé en présence d'une quantité d'air contrôlée pour transformer une partie du sulfure d'hydrogène en anhydride sulfureux selon la réaction (1) suivante :

$$H_2S + 3/2 \ O_2 \rightarrow H_2O + SO_2 \qquad 1)$$

Puis, dans la deuxième étape, on fait passer le mélange gazeux obtenu à la première étape dans des convertisseurs en série renfermant chacun un lit catalytique pour réaliser la réaction de Claus (2) proprement dite.

$$2 \ H_2S + SO_2 \rightarrow 3/x \ S_x + 2 \ H_2O \qquad 2)$$

Le bilan global de la réaction est donc (3)

$$3H_2S + 3/2 \ O_2 \rightarrow 3/x \ S_x + 3 \ H_2O \qquad 3)$$

En sortie des convertisseurs, le gaz contient encore des composés soufrés qui sont oxydés en $SO_2$ avant d'être rejetés.

Le gaz traité selon le procédé Claus renferme généralement outre le sulfure d'hydrogène, des hydrocarbures, de l'eau et du dioxyde de carbone qui forment des composés organiques du soufre, par réaction avec le sulfure d'hydrogène, tels que l'oxysulfure de carbone COS ou le bisulfure de carbone $CS_2$.

Ces composés sont soit déjà contenus dans le gaz à traiter, soit formés au cours de la première étape d'oxydation conduite à température élevée.

Ils sont généralement stables au niveau des convertisseurs catalytiques et sont donc très gênants car ils contribuent à accroître de 20 à 50 % les émissions de $SO_2$ et de composés soufrés dans l'atmosphère après incinération des fumées.

Ces composés peuvent être éliminés notamment par hydrolyse selon les réactions(4) et (5)

$$COS + H_2O \rightarrow CO_2 + H_2S \qquad 4)$$

$$CS_2 + 2 \ H_2O \rightarrow CO_2 + 2 \ H_2S \qquad 5)$$

Ces réactions s'effectuent également sur un lit catalytique et interviennent généralement simultanément à la réaction de Claus dans les convertisseurs en mettant en jeu les mêmes catalyseurs, généralement à base d'alumine, ou d'oxydes de titane, de cérium, de silicium ou de zirconium.

Comme pour toute autre réaction catalytique, on cherche à mettre au point des catalyseurs toujours plus performants permettant notamment d'aboutir à des taux de conversion les plus élevés possibles.

En particulier, dans ce cas de catalyse hétérogène, la réaction est contrôlée par la diffusion des réactifs dans le lit catalytique, d'où l'importance de la granulométrie et de la macroporosité des particules du catalyseur.

L'invention a pour but de fournir un catalyseur à base d'alumine actif pour le traitement de gaz contenant des composés soufrés dont les performances sont améliorées en raison d'une macroporosité optimisée.

A cet effet, l'invention a pour objet un catalyseur pour le traitement de gaz contenant des composés soufrés par la réaction de Claus ou par hydrolyse, formé de particules poreuses à base d'alumine, caractérisé en ce que le volume cumulé créé par tous les pores dont le diamètre est supérieur à 0,1 μm, noté $V_{0,1}$, est supérieur à 12 ml/100 g de catalyseur et en ce que le volume cumulé créé par tous les pores dont le diamètre est supérieur à 1 μm, noté $V1$, est tel que le rapport $V_1/V_{0,1}$ est supérieur ou égal à 0,65.

Les présents inventeurs ont en effet constaté que, pour des caractéristiques fixées notamment de granulométrie, de surface et de chimie de surface, l'allure de la répartition du volume poreux des catalyseurs à base d'alumine est déterminante pour l'activité catalytique.

La répartition du volume poreux peut être représentée par la variation du volume cumulé créé par tous les pores de taille supérieure à un diamètre donné en fonction de ce diamètre de pores.

On détermine ainsi quelles sont les tailles de pores qui contribuent majoritairement à la création de volume dans le matériau catalytique.

Les inventeurs ont établi que la zone poreuse déterminante est située entre 0,1 et 1 μm et que les catalyseurs de porosité tels que le volume cumulé créé par tous les pores de diamètre supérieur à 1 μm est relativement élevé révèlent des propriétés tout à fait particulières et des performances supérieures aux catalyseurs connus de l'art antérieur.

Ainsi, les catalyseurs de l'invention ont un volume $V_{0,1}$ supérieur à 12 ml/100 g de catalyseur et un volume $V_1$ au moins égal à 0,65 fois $V_{0,1}$.

De préférence, $V_{0,1}$ est supérieur à 14 ml/100 g de catalyseur et $V_1$ est au moins égal à 0,70 fois $V_{0,1}$.

Un catalyseur à base d'alumine selon l'invention peut contenir, en poids, de 0,5 à 100 % d'alumine et de préférence de 60 à 99 %.

On peut en particulier, utiliser des composés hydratés d'alumine tels que : l'hydrargillite, la bayerite, la boehmite, la pseudo-boehmite et les gels d'alumine amorphe ou essentiellement amorphe. On peut également mettre en oeuvre les formes déshydratées ou partiellement déshydratées de ces composés qui sont constitués d'alumines de transition et qui comportent au moins une des phases prises dans le groupe constitué par rhô, chi, êta, gamma, kappa, thêta, delta, alpha.

En particulier, on pourra notamment utiliser des alumines obtenues selon l'un des procédés suivants, après éventuellement broyage et tamisage des particules:

- en précipitant une solution aqueuse d'un sel d'aluminium par une solution d'un aluminate alcalin, on atomise le précipité obtenu, puis on le remet en suspension dans une solution aqueuse ayant un pH compris entre 4,5 et 7, on atomise et on sèche la bouillie d'alumine obtenue puis on lave, sèche et calcine le produit. (Procédé décrit dans le brevet US 3 520 654).

- par précipitation d'un gel d'alumine à un pH compris entre 7,5 et 11, lavage, essorage, remise en suspension, déshydratation rapide du produit dans un courant de gaz chauds à une température d'entrée comprise entre environ 350 et 1000°C puis calcination. (Procédé décrit dans le brevet FR 2 221 405).

- par précipitation d'un gel d'alumine à un pH compris entre 7 et 10,5, mûrissement du précipité à un pH compris entre 10 et 11, homogénéisation et atomisation à 250-550°C de la bouillie obtenue puis calcination. (Procédé décrit dans le brevet GB 888 772).

- par précipitation d'un aluminate alcalin par un acide minéral à une température comprise entre 30 et 75°C, mûrissement dans un second réacteur à 35-70°C à un pH voisin de 7, recyclage de la bouillie obtenue dans le réacteur de mélange, filtration, lavage, séchage du produit par atomisation puis calcination. (Procédé décrit dans le brevet US 3 630 670).

- par déshydratation rapide d'hydroxydes ou d'oxyhydroxydes d'aluminium, et plus particulièrement, d'hydrargillite dans un courant de gaz chauds ; cette déshydratation opérée dans n'importe quel appareillage approprié à l'aide d'un courant de gaz chauds, la température d'entrée des gaz dans l'appareillage variant généralement de 400 à 1200°C environ, le temps de contact de l'hydroxyde ou de l'oxyhydroxyde avec les gaz chauds étant généralement compris entre une fraction de seconde et 4-5 secondes ; un tel procédé de préparation de poudre d'alumine active a notamment été décrit dans le brevet français N° 1 108 011.

- Par traitement dans un milieu aqueux ayant un pH inférieur à 9 d'une poudre d'alumine active obtenue par déshydratation rapide d'hydrargillite dans un courant de gaz chauds, séchage par atomisation, puis calcination (Procédé décrit dans la demande de brevet européen N° 15 196).

L'alumine peut être utilisée seule ou en mélange avec un ou plusieurs autres oxydes tels que la silice, l'oxyde de titane, l'oxyde de zirconium, l'oxyde de cérium, l'oxyde d'étain, les oxydes de terres rares trivalents, l'oxyde de molybdène, l'oxyde de cobalt, l'oxyde de nickel, l'oxyde de fer ou analogues.

Les oxydes autres que l'alumine peuvent représenter de 0 à 40 % du poids du catalyseur.

Il est à noter que les oxydes de titane, de cérium, de zirconium ou la silice sont eux-mêmes catalytiquement actifs pour le traitement de gaz contenant des composés soufrés impliquant une réaction de Claus ou d'hydrolyse.

Les catalyseurs de l'invention peuvent, en outre, comprendre un ou plusieurs constituants choisis parmi les argiles, silicates, sulfates d'un métal alcalino-terreux, ou d'ammonium, les fibres céramiques et l'amiante.

Ils peuvent également comprendre des additifs pour faciliter la mise en forme et des additifs pour améliorer leurs propriétés mécaniques finales.

A titre d'exemple d'additifs, on peut citer notamment : la cellulose, la carboxyméthyl-cellulose, la carboxyéthyl-cellulose, du tall-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols etc.

Les particules poreuses de catalyseur de l'invention peuvent être préparées par tout procédé connu d'agglomération ou de mise en forme d'une poudre contenant de l'alumine, et éventuellement d'autres ingrédients choisis parmi ceux mentionnés ci-dessus.

Les particules formées peuvent se présenter notamment sous forme de billes ou de monolithes ou peuvent avoir diverses formes accessibles par extrusion. On peut également préparer le catalyseur en agglomérant une poudre contenant de l'alumine selon un procédé de mise en forme quelconque, puis en concassant les agglomérats ainsi obtenus. Les particules concassées ne présentent alors pas de forme particulière.

On préfère cependant les catalyseurs sous forme de billes dont le diamètre est de 1,5 à 10 mm et plus particulièrement de 3 à 7 mm.

La mise en forme des particules peut s'effectuer directement sur la poudre catalytique ou bien sur une pâte minérale obtenue à partir de la poudre catalytique à laquelle on ajoute notamment de l'eau.

Ainsi, pour la préparation du catalyseur, on peut mettre en oeuvre toute technique connue de mise en forme de poudre ou de pâte, telle que le pastillage, l'extrusion ou la granulation.

Le réglage de la porosité caractéristique des catalyseurs de l'invention a lieu lors de cette étape de mise en forme des particules de catalyseur.

Selon la méthode employée pour la mise en forme, l'homme du métier peut agir sur différents paramètres opératoires de façon connue en soi pour imposer la porosité désirée.

Ainsi, le catalyseur peut être fabriqué par exemple sous forme de billes par granulation dans un appareil de mise en forme adapté, par exemple, un drageoir tel qu'un drageoir tournant ou un tambour. La porosité sera fixée en particulier par un réglage adéquat du débit d'introduction de la poudre catalytique et éventuellement d'eau, de la vitesse de rotation de l'appareil ou lors de l'introduction d'une amorce à la mise en forme.

Dans le cas où on fabrique des particules de catalyseur par extrusion, le réglage de la porosité se fera de façon similaire dans l'étape de malaxage de la poudre catalytique préalable à la mise en forme proprement dite.

On peut aussi ajouter à la poudre catalytique avant la mise en forme des agents porogènes disparaissant totalement par chauffage et créant ainsi la macroporosité recherchée. Comme composés porogènes utilisés, on peut citer à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité des porogènes n'est pas critique et est déterminée par le volume macroporeux désiré.

Les catalyseurs présentant les caractéristiques de macroporosité selon l'invention sont hautement efficaces à la fois pour catalyser la réaction de Claus (équation (2)) et les réactions d'hydrolyse de composés organiques du soufre (équations (4) et (5)).

L'invention a donc également pour objet l'utilisation d'un catalyseur tel que décrit précédemment pour traiter des gaz contenant des composés soufrés en vue de la production de soufre élémentaire par mise en oeuvre de la réaction de Claus ainsi que pour traiter des gaz contenant des composés organiques du soufre par mise en oeuvre d'une réaction d'hydrolyse.

L'invention a enfin pour objet des procédés de traitement de gaz contenant des composés soufrés par mise en oeuvre de la réaction de Claus ou par hydrolyse par passage de ces gaz sur un lit catalytique caractérisé en ce qu'au moins une partie du catalyseur est constituée par un catalyseur tel que décrit précédemment.

Les exemples suivants et les figures annexées 1 et 2 illustrent l'invention.

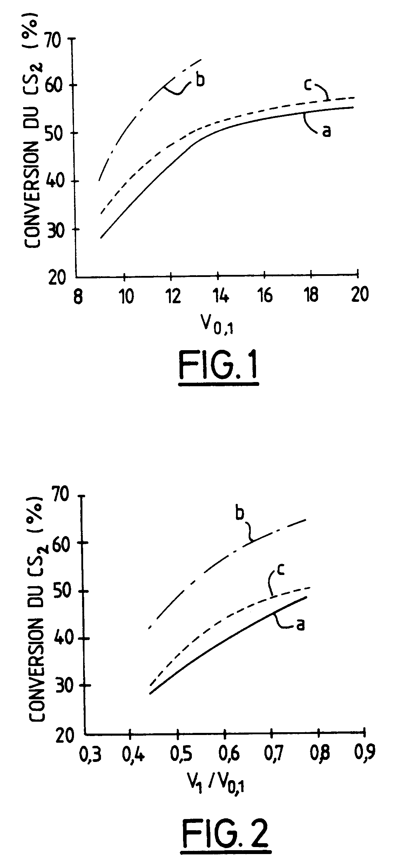

Les figures 1 et 2 illustrent la variation de l'efficacité catalytique d'un catalyseur à base d'alumine en fonction de ses caractéristiques de macroporosité, $V_{0,1}$ pour la figure 1 et $V_1/V_{0,1}$ pour la figure 2, pour trois conditions opératoires différentes (a), (b) et (c).

Les conditions (a) correspondent à une teneur en $O_2$ de 10 ppm et un temps de contact de 2 secondes avec les catalyseurs neufs.

Les conditions (b) correspondent à une teneur en $O_2$ de 200 ppm et un temps de contact de 3 secondes avec les catalyseurs neufs.

Les conditions (c) correspondent à une teneur en $O_2$ de 200 ppm et un temps de contact de 3 secondes avec les catalyseurs sévèrement vieillis (c'est à dire que leur surface spécifique est abaissée à 120 $m^2$/g de catalyseur).

## EXEMPLE 1

Des catalyseurs à base d'alumine de même composition, présentant une teneur en soude (exprimée en poids de $Na_2O$) de 2000 ppm en poids, sont mis en forme par granulation, pour obtenir des billes de diamètre compris entre 3,1 et 6,3 mm, en faisant varier la macroporosité de façon à ce que le volume $V_{0,1}$ varie de 8 à 20 ml/100 g de catalyseur et à ce que le rapport $V_1/V_{0,1}$ varie de 0,4 à 0,8.

Ces catalyseurs sont testés en tant que catalyseur de 1er réacteur ($R_1$) et de 2ème réacteur ($R_2$) dans un procédé Claus.

En $R_1$, la réaction cruciale, car la plus difficile à mener à bien, est la réaction d'hydrolyse du COS et surtout du $CS_2$. En $R_2$, la température plus faible et la plus faible teneur en $H_2S$ rendent la réaction Claus traditionnelle plus discriminante, du fait des problèmes plus préoccupants liés à la sulfatation de l'alumine.

Les tendances constatées, en hydrolyse du $CS_2$ en $R_1$, et en réaction de Claus en $R_2$, sont toujours retrouvées : si un catalyseur A est plus efficace qu'un catalyseur B en $R_1$, A est aussi plus efficace que B en $R_2$.

Ainsi, ne sont rapportés ici que des résultats de catalyse d'hydrolyse du $CS_2$, en condition $R_1$.

Des tests de catalyse ont donc été conduits en mettant en présence des catalyseurs un gaz à traiter dont la composition volumique est la suivante :

| | |
|---|---|
| $H_2S$ | 6 % |
| $SO_2$ | 4 % |
| $CS_2$ | 1 % |
| $H_2O$ | 30 % |
| $N_2$ | 59 % |

La mise en contact est effectuée dans un réacteur à 320°C, en fonctionnement isotherme, sous une teneur en oxygène variable et avec des temps de contact variables.

Pour un volume identique de réacteur rempli de catalyseur et un débit d'entrée identique de gaz à traiter, on compare les performances des différents catalyseurs en mesurant l'activité d'hydrolyse et en analysant par chromatographie en phase gazeuse l'$H_2S$, le $SO_2$,

le COS et le $CS_2$ contenus dans les gaz en sortie du réacteur.

La conversion du $CS_2$ est ainsi mesurée après obtention d'un palier stable pour la teneur en produits de réaction en sortie du réacteur.

Pour chaque test catalytique, on mesure le taux de conversion de $CS_2$ correspondant au catalyseur employé.

Le tableau 1 ci-après récapitule les taux de conversion mesurés pour quatre catalyseurs utilisés dans les conditions (a), (b) et (c), qui se distinguent par la valeur de leur $V_{0,1}$, pour un rapport $V_1/V_{0,1}$ constant.

TABLEAU 1

| | Taux de conversion du $CS_2$ (%) | | |
|---|---|---|---|
| $V_{0,1}$ (ml/100 g) | (a) | (b) | (c) |
| 9 | 28 | 40 | 33 |
| 12 | 43 | 60 | 47 |
| 13,5 | 49 | 65 | 51 |
| 20 | 55 | | 57 |

Le graphe de la figure 1 représente la variation du taux de conversion de $CS_2$ en fonction du volume $V_{0,1}$ pour un rapport $V_1/V_{0,1}$ constant, dans les conditions (a), (b) et (c).

On constate par exemple que, dans les conditions (a), le taux de conversion de $CS_2$ est relativement faible si le volume poreux à 0,1 micron $V_{0,1}$ du catalyseur est inférieur à 12 ml/100 g. Le taux de conversion croît avec $V_{0,1}$, pour toutes les conditions réactionnelles étudiées, et semble tendre vers un maximum dans les conditions (a) et (c). On remarque que, lorsque $V_{0,1}$ est voisin de ou de préférence supérieur à 14 ml/100g, le taux de conversion est très satisfaisant et très proche du maximum observé. Par exemple, un catalyseur ayant un volume poreux à 0,1 micron d'environ 14 ml/100 g permet d'atteindre un taux de conversion de $CS_2$ de 50 %. La conversion est plus de 10% plus élevée que pour le catalyseur analogue dont $V_{0,1}$ vaut 12 ml/100g.

Le tableau 2 ci-après récapitule les taux de conversion mesurés pour quatre catalyseurs utilisés dans les conditions (a), (b), et (c), qui se distinguent par la valeur de leur $V_1/V_{0,1}$, pour un $V_{0,1}$ constant.

TABLEAU 2

| | Taux de conversion du $CS_2$ (%) | | |
|---|---|---|---|
| $V_1/V_{0,1}$ | (a) | (b) | (c) |
| 0,44 | 28 | 42 | 30 |
| 0,65 | 42,5 | 59,5 | 46,5 |

TABLEAU 2 (suite)

| | Taux de conversion du $CS_2$ (%) | | |
|---|---|---|---|
| $V_1/V_{0,1}$ | (a) | (b) | (c) |
| 0,66 | 43 | 60 | 47 |
| 0,78 | 49 | 65 | 51 |

Le graphe de la figure 2 représente la variation du taux de conversion de $CS_2$ en fonction du rapport $V_1/V_{0,1}$, pour un volume $V_{0,1}$ constant, dans les conditions opératoires (a), (b) et (c).

Le taux de conversion augmente avec le rapport $V_1/V_{0,1}$ dans chacune des conditions opératoires (a), (b) et (c). Les catalyseurs tels que $V_1/V_{0,1}$ est supérieur à 0,65 peuvent être utilisés avantageusement dans toutes les conditions, avec une conversion supérieure à 40 % en conditions (a). Les catalyseurs pour lesquels $V_1/V_{0,1}$ est supérieur à 0,70 sont encore plus efficaces dans toutes les conditions.

Dans les deux tableaux ou sur les deux graphes, on note que les performances de ces catalyseurs dans les conditions (c), qui correspondent à des catalyseurs sévèrement vieillis, sont encore excellentes. La chute de conversion entre un catalyseur neuf et un catalyseur vieilli avec une teneur en $O_2$ identique n'est que de 15 % au maximum.

## EXEMPLE 2

De la poudre d'alumine A est préparée par déshydratation d'hydroxydes ou d'oxyhydroxydes d'aluminium selon le procédé du brevet français N° 1 108 011.

Une autre poudre d'alumine B est préparée par traitement aqueux à pH<9 d'une poudre d'alumine active obtenue par déshydratation rapide d'hydrargillite selon le procédé de la demande de brevet européen N° 15 196.

Les poudres A et B sont mélangées en des proportions telles que la teneur en soude du mélange, exprimée en poids de $Na_2O$, soit de 2000 ppm en poids.

Le mélange des deux poudres est ensuite mis en forme par granulation pour former des billes d'alumine de diamètre compris entre 3 et 6 mm. Les conditions opératoires de la mise en forme sont telles que le volume poreux $V_{0,1}$ est de 19 ml/100 g de catalyseur et le rapport $V_1/V_{0,1}$ est de 0,82.

On effectue un test de catalyse en mettant en présence du catalyseur un gaz à traiter dont la composition volumique est identique à celle de l'exemple 1. La mise en contact est effectuée dans un réacteur en fonctionnement isotherme à 320°C, pendant un temps de contact de 3 secondes sous une teneur en oxygène de 1500 ppm.

Le taux de $CS_2$ converti est de 64 % à l'équilibre.

## Revendications

1. Catalyseur pour le traitement de gaz contenant des composés soufrés, par la réaction de Claus ou par hydrolyse, formé de particules poreuses à base d'alumine, caractérisé en ce que le volume cumulé créé par tous les pores dont le diamètre est supérieur à 0,1 $\mu$m, $V_{0,1}$, est supérieur à 12 ml/100 g de catalyseur et en ce que le volume cumulé créé par tous les pores dont le diamètre est supérieur à 1 $\mu$m, $V_1$, est tel que le rapport $V_1/V_{0,1}$ est supérieur ou égal à 0,65.

2. Catalyseur selon la revendication 1, caractérisé en ce que $V_{0,1}$ est supérieur à 14 ml/100 g et $V_1/V_{0,1}$ est supérieur à 0,70.

3. Catalyseur selon la revendication 1 ou 2, caractérisé en ce qu'il contient de 0,5 à 100 % en poids d'alumine, de préférence de 60 à 99 %.

4. Catalyseur selon l'une quelconque des revendications 1 à 3, caractérisé en ce qu'il contient au moins un oxyde d'un métal choisi parmi le cérium, le zirconium, le silicium, l'étain, les terres rares trivalentes, le molybdène, le cobalt, le nickel et le fer, dans une proportion variant de 0 à 40 % en poids.

5. catalyseur selon l'une quelconque des revendications 1 à 4, caractérisé en ce que il comprend au moins un composé choisi parmi les argiles, les silicates, les sulfates d'un métal alcalino-terreux ou d'ammonium, les fibres céramiques et l'amiante.

6. Catalyseur selon l'une quelconque des revendications 1 à 5, caractérisé en ce que lesdites particules sont formées par agglomération d'une poudre contenant de l'alumine, notamment par pastillage, par extrusion ou par granulation.

7. Catalyseur selon l'une quelconque des revendications 1 à 6, caractérisé en ce que lesdites particules se présentent sous forme de billes dont le diamètre est de 1,5 à 10 mm, de préférence de 3 à 7 mm.

8. Utilisation d'un catalyseur selon l'une quelconque des revendications 1 à 7, pour traiter des gaz contenant des composés soufrés en vue de la production de soufre élémentaire par mise en oeuvre de la réaction de Claus.

9. Utilisation d'un catalyseur selon l'une quelconque des revendications 1 à 7, pour traiter des gaz contenant des composés organiques du soufre par hydrolyse.

10. Procédé de traitement d'un gaz contenant des composés soufrés par mise en oeuvre de la réaction de Claus par passage dudit gaz sur un lit catalytique, caractérisé en ce qu'au moins une partie du catalyseur est constituée par un catalyseur selon l'une quelconque des revendications 1 à 7.

11. Procédé de traitement d'un gaz contenant des composés organiques du soufre par mise en oeuvre d'une réaction d'hydrolyse par passage dudit gaz sur un lit catalytique, caractérisé en ce que au moins une partie du catalyseur est constituée par un catalyseur selon l'une quelconque des revendications 1 à 7.

## Claims

1. Catalyst for the treatment of gas containing sulphur compounds, by the Claus reaction or by hydrolysis, said catalyst being formed of alumina-based porous particles, **characterised in that** the combined volume created by all the pores whose diameter is greater than 0.1 $\mu$m, $V_{0,1}$ is greater than 12 ml/100 g catalyst and in that the combined volume created by all the pores whose diameter is greater than 1 $\mu$m, $V_1$, is such that the ratio $V_1/V_{0,1}$ is greater than or equal to 0.65.

2. Catalyst according to claim 1, **characterised in that** $V_{0,1}$ is greater than 14 ml/100g and $V_1/V_{0,1}$ is greater than 0.70.

3. Catalyst according to claim 1 or 2, **characterised in that** it contains from 0.5 to 100 % by weight alumina, preferably from 60 to 99 %.

4. Catalyst according to any one of claims 1 to 3, **characterised in that** it contains at least one oxide of a metal chosen from cerium, zirconium, silicium, tin, trivalent rare earths, molybdenum, cobalt, nickel and iron, in a proportion varying from 0 to 40 % by weight.

5. Catalyst according to any one of claims 1 to 4, **characterised in that** it comprises at least one compound chosen from clays, silicates, sulphates of an alkaline-earth metal or of ammonium, ceramic fibres and asbestos.

6. Catalyst according to any one of claims 1 to 5, **characterised in that** said particles are formed by agglomeration of a powder containing alumina, especially by pelletizing, by extrusion or by granulation.

7. Catalyst according to any one of claims 1 to 6, **characterised in that** said particles appear in the form of beads whose diameter is between 1.5 and 10 mm, preferably between 3 and 7 mm.

8. Use of a catalyst according to any one of claims 1 to 7 to treat gases containing sulphur compounds with a view to producing elementary sulphur by implementation of the Claus reaction.

9. Use of a catalyst according to any one of claims 1 to 7 to treat gases containing organic sulphur compounds by hydrolysis.

10. Method of treating a gas containing sulphur compounds by implementation of the Claus reaction by passing said gas on a catalyst bed, **characterised in that** at least a portion of the catalyst is constituted by a catalyst according to any one of claims 1 to 7.

11. Method of treating a gas containing organic sulphur compounds by implementation of a hydrolysis reaction by passing said gas on a catalyst bed, **characterised in that** at least a portion of said gas is constituted by a catalyst according to any one of claims 1 to 7.

**Patentansprüche**

1. Katalysator für die Behandlung von Schwefelverbindungen enthaltendem Gas durch das Claus-Verfahren oder durch Hydrolyse, welcher aus porösen Teilchen auf der Basis von Aluminiumoxid gebildet ist, **dadurch gekennzeichnet, daß** das von allen Poren, deren Durchmesser mehr als 0,1 µm beträgt, geschaffene Gesamtvolumen $V_{0,1}$ größer als 12 ml/100 g Katalysator ist, **und daß** das von allen Poren, deren Durchmesser mehr als 1 µm beträgt, geschaffene Gesamtvolumen $V_1$ derart ist, daß das Verhältnis von $V_1/V_{0,1}$ größer oder gleich 0,65 ist.

2. Katalysator nach Anspruch 1, **dadurch gekennzeichnet, daß** $V_{0,1}$ größer als 14 ml/100 g und $V_1/V_{0,1}$ größer als 0,70 ist.

3. Katalysator nach Anspruch 1 oder 2, **dadurch gekennzeichnet, daß** er 0,5 bis 100 Gew.-% und vorzugsweise 60 bis 99 Gew.-% Aluminiumoxid enthält.

4. Katalysator nach einem der Ansprüche 1 bis 3, **dadurch gekennzeichnet, daß** er mindestens ein Oxid eines Metalls, das aus Cer, Zirconium, Silicium, Zinn, den dreiwertigen Seltenerdmetallen, Molybdän, Cobalt, Nickel und Eisen ausgewählt ist, in einem Anteil von 0 bis 40 Gew.-% enthält.

5. Katalysator nach einem der Ansprüche 1 bis 4, **dadurch gekennzeichnet, daß** er mindestens eine Verbindung enthält, die aus Tonen, Silicaten, Sulfaten eines Erdalkalimetalls oder Ammoniumsulfat, Keramikfasern und Asbest ausgewählt ist.

6. Katalysator nach einem der Ansprüche 1 bis 5, **dadurch gekennzeichnet, daß** die Teilchen durch Agglomerieren eines Aluminiumoxid enthaltenden Pulvers, insbesondere durch Pelletisieren, Extrudieren oder Granulieren, gebildet sind.

7. Katalysator nach einem der Ansprüche 1 bis 6, **dadurch gekennzeichnet, daß** die Teilchen in Form von Kugeln vorliegen, deren Durchmesser 1,5 bis 10 mm und vorzugsweise 3 bis 7 mm beträgt.

8. Verwendung eines Katalysators nach einem der Ansprüche 1 bis 7 zur Behandlung eines Schwefelverbindungen enthaltenden Gases, um durch das Claus-Verfahren elementaren Schwefel herzustellen.

9. Verwendung eines Katalysators nach einem der Ansprüche 1 bis 7 zur Behandlung eines organische Schwefelverbindungen enthaltenden Gases durch Hydrolyse.

10. Verfahren zur Behandlung eines Schwefelverbindungen enthaltenden Gases durch das Claus-Verfahren, indem das Gas über ein Katalysatorbett geleitet wird, **dadurch gekennzeichnet, daß** zumindest ein Teil des Katalysators aus einem Katalysator gemäß einem der Ansprüche 1 bis 7 besteht.

11. Verfahren zur Behandlung eines organische Schwefelverbindungen enthaltenden Gases durch eine Hydrolysereaktion, indem das Gas über ein Katalysatorbett geleitet wird, **dadurch gekennzeichnet, daß** zumindest ein Teil des Katalysators aus einem Katalysator gemäß einem der Ansprüche 1 bis 7 besteht.

FIG.1

FIG.2